# EUROPEAN PATENT SPECIFICATION

(11) **EP 4 086 141 B1**
(45) Date of publication and mention of the grant of the patent: **20.05.2026**
(21) Application number: 21212248.5
(22) Date of filing: 03.12.2021
(51) Int. Cl.: B62D 15/02, B60Q 1/24, B60Q 1/50, G08G 1/005

(54) **METHOD AND APPARATUS FOR VEHICLE CONTROL, VEHICLE, SERVER, AND STORAGE MEDIUM**
VERFAHREN UND VORRICHTUNG ZUR STEUERUNG EINES FAHRZEUGS, FAHRZEUG, SERVER UND SPEICHERMEDIUM
PROCÉDÉ ET APPAREIL DE COMMANDE DE VÉHICULE, VÉHICULE, SERVEUR ET SUPPORT D'ENREGISTREMENT

(30) Priority: 08.05.2021 CN 202110501955
(43) Date of publication of application: 09.11.2022
(73) Proprietor: Guangzhou Xiaopeng Motors Technology Co., Ltd., Guangzhou, Guangdong Province 510000 (CN)
(72) Inventor: ZHANG, Jiawen, Guangzhou (CN)
(74) Representative: Ran, Handong

(56) References cited:
- DE-A1- 102015 214 005
- US-A1- 2006 046 684
- US-A1- 2019 054 852

## Description

### Technical Field

The present invention relates to the field of remote control technologies, and more particularly, to a method and an apparatus for vehicle control, a vehicle, a server, and a storage medium.

### Background

The Wake-on-LAN (WOL) technology refers to remote control of computer startup via a local area network, the Internet or a communication network. With the development of vehicle intelligence, the WOL technology has been gradually applied to remote control of vehicles, which allows a user to build up a remote service by sending a control signal to the vehicle via a client terminal, and then use various control functions in the remote service to send out manipulation instructions, so as to direct various operations of applications in the vehicle.

At present, remote control of a vehicle requires a user to perform remote control via a vehicle key or a mobile phone client. For example, when the vehicle is parked in a high-temperature or cold environment, the user needs to manually turn on the air conditioning system in the vehicle in advance with the vehicle key to adjust the temperature in the vehicle cabin before starting the vehicle. However, in an actual remote control scenario, user tend to forget to control the vehicle in advance. Therefore, the manual remote control method is not suitable to achieve the effect of automatically adjusting states of vehicles before users start the vehicles, and imposes burden on users' mind, thus does not reflect the right approach of intelligent vehicle control.

DE 10 2015 214005 A1 shows the features of the preamble of claims 1 and 8 and discloses a method and device for operating a vehicle. The method comprises: determining a current position of a person relative to a parking lot in which a vehicle is parked; determining a meeting point at which the vehicle and the person should meet, based on the determined current position; automatically guiding the vehicle to the determined meeting point, so that the person at the meeting point can take over the vehicle.

US 2006/046684 A1 describes a welcoming system for welcoming a user of an automobile, which has a host communication means provided in the automobile or a facility around a parking location of the automobile. The system further has a distance detecting means for detecting a distance between the user and the parking automobile. A welcoming control means operates a welcoming operating means, such as a head lamp of the automobile, in such a manner that a content of the welcoming operations will be selected and changed depending on the detected distance between the user and the automobile.

US 2019/054852 A1 discloses method of guiding a vehicle user approaching or exiting a vehicle. The method comprises projecting, by means of illumination from one or more light sources associated with the vehicle, a distinct illuminated path on the ground. The distinct illuminated path on the ground extends between the vehicle and a location remote from the vehicle.

### Summary

Examples of a method and an apparatus for vehicle control, a vehicle, a server, and a storage medium are provided. Aspects of the present application are set out in the appended set of claims.

In a first example, a method for vehicle control is provided, including: acquiring a parking position of a vehicle and a current position of a target obj ect when it is detected that the vehicle has stopped, the current position representing a position of the target object; then determining a planned route according to the current position and the parking position, the planned route representing a feasible route between the target object and the vehicle; and detecting a probability of the target object approaching the vehicle according to the planned route to acquire a detection result, so as to determine a control policy for the vehicle according to the detection result.

In a second example, an apparatus for vehicle control is provided and includes: a first acquisition module for acquiring a parking position of a vehicle when it is detected that the vehicle has stopped; a second acquisition module for acquiring a current position of a target object, the current position representing a position of the target object; a determination module for determining a planned route according to the current position and the parking position, the planned route representing a feasible route between the target object and the vehicle; a detection module for detecting a probability of the target object approaching the vehicle according to the planned route to acquire a detection result; and a control module for determining a control policy for the vehicle according to the detection result.

In a third example, a vehicle is provided and includes a processor and a memory, and the memory stores computer program instructions that, when invoked by the processor, perform the method for vehicle control described above.

In a fourth example, a server is provided and includes a processor and a memory, and the memory stores computer program instructions that, when invoked by the processor, perform the method for vehicle control described above.

In a fifth example, a computer-readable storage medium is provided which stores program code, where the program code, when run by a processor, performs the method for vehicle control described above.

The methods and apparatuses for vehicle control, vehicles, servers, and storage medium are provided to: acquire a parking position of a vehicle when it is detected that the vehicle has stopped; acquire a current position of a target object, the current position representing a position of the target object; determine a planned route according to the current position and the parking position, the planned route representing a feasible route between the target object and the vehicle; detect a probability of the target object approaching the vehicle according to the planned route to acquire a detection result; and further determine a control policy for the vehicle according to the detection result. Therefore, a planned route is determined by positioning the vehicle and the target object, and the probability of the target object approaching the vehicle is detected according to the planned route, so that the vehicle is automatically controlled according to the result of the probability detection, thereby greatly reducing the inconvenience of the driver in using the remote control of the vehicle.

### Brief Description of the Drawings

In order to more clearly illustrate the technical solutions of the present invention, the accompanying drawings illustrating examples will be briefly introduced below. It is clear that the accompanying drawings in the description below only show some examples. A person skilled in the art would be able to derive other examples according to these accompanying drawings without any inventive effort.
FIG. 1 shows a structural schematic diagram of a vehicle control system.
FIG. 2 shows a schematic flow chart of an example of the method for vehicle control.
FIG. 3 shows a schematic flow chart of another method for vehicle control provided by an embodiment of the present invention.
FIG. 4 shows a schematic flow chart of step S250 in the method for vehicle control of FIG. 3.
FIG. 5 shows a schematic flow chart of step S270 in the method for vehicle control of FIG. 3.
FIG. 6 shows an exemplary sequence flow chart of a method for vehicle control.
FIG. 7 shows a flow chart of a method for vehicle control provided by an embodiment of the present invention.
FIG. 8 shows a schematic flow chart of yet another method for vehicle control provided by an embodiment of the present invention.
FIG. 9 shows a schematic flow chart of step S330 in the method for vehicle control of FIG. 8.
FIG. 10 shows a sequence flow chart of another method for vehicle control provided by an embodiment of the present invention.
FIG. 11 shows a modular block diagram of an apparatus for vehicle control provided by an embodiment of the present invention.
FIG. 12 is a modular block diagram of a vehicle provided by an embodiment of the present invention.
FIG. 13 is a modular block diagram of a server provided by an embodiment of the present invention.
FIG. 14 is a modular block diagram of a computer-readable storage medium provided by an embodiment of the present invention.

### Detailed Description

Implementations of the present invention are described in detail below, and examples of the implementations are shown in the accompanying drawings, where identical or similar reference numerals throughout denote identical or similar elements or elements having the same or similar functions. The implementations described below with reference to the accompanying drawings are illustrative only, for the purposes of explaining the present invention, and are not to be construed as limiting the present invention.

Remote control of a vehicle using a mobile phone client or a vehicle key has been widely used in the field of vehicle control technologies. Remote control of vehicles allows control the vehicles at distance, as the remote control systems of most vehicles may perform functions such as starting vehicle air conditioners, seat adjustment, control of central control locks and vehicle searching assistance. It is common for drivers to remotely control on/off of vehicle air conditioners via client terminals in order to regulate the temperature (preheating/precooling) in the vehicle cabins in advance. It should be noted that, at present, the remote control of the vehicle has not achieved the function of complete intelligent control, and in many actual application scenarios, the driver needs to manually perform remote control on the vehicle according to usage requirements.

For example, if the driver wants to adjust the temperature in the vehicle cabin before driving, the driver may send an air conditioning control instruction to the vehicle via the mobile phone client, so that the vehicle may start the air conditioner to adjust the temperature in the vehicle cabin after receiving the control instruction. It can be seen that in the above application scenario of remotely controlling the vehicle air conditioner, the driver needs to manually control the vehicle air conditioner before arriving at the vehicle, and in daily life, the driver often forgets to start the vehicle air conditioner in advance when driving. Therefore, the manual remote control of the vehicle cannot avoid the inconvenience caused by forgetting, but will increase the thinking burden of the driver. The vehicle cannot automatically and intelligently adjust the relevant state and parameters of the vehicle before the driver arrives, so it cannot reflect the intelligence of intelligent vehicles.

In order to solve the problems described above, a method for vehicle control is provided, which performs intelligent control on a vehicle according to the probability of a target object approaching the vehicle by: acquiring the parking position of the vehicle when it is detected that the vehicle has stopped; acquiring the current position of the target object, the current position representing the position of the target object; determining a planned route according to the current position and the parking position, the planned route representing a feasible route between the target object and the vehicle; and detecting a probability of the target object approaching the vehicle according to the planned route to acquire a detection result; and determining a control policy for the vehicle according to the detection result. The description below first explains an application scenario of a method for vehicle control involved in the present invention.

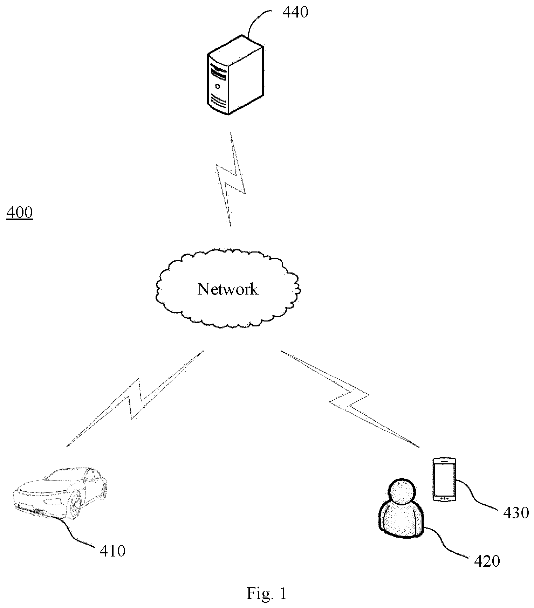

As shown in FIG. 1, the method for vehicle control provided by the present invention may be applied to a vehicle control system 400, which includes a vehicle 410, a target object 420, a mobile terminal 430, and a server 440. The vehicle 410 and the mobile terminal 430 are respectively connected to the server 440 via a network, and the network may be a network capable of realizing mutual communication and connection between a vehicle and a server and between a vehicle and a mobile terminal, such as a 5G network (5th Generation Mobile Networks), an Internet of Vehicles (IOV), and the like, which is not limited herein. It should be noted that the vehicle 410 may have the same computing function and storage function as the server 440. A target object refers to a control device that may communicatively connect to the vehicle 410 or the server 440 and has a positioning function. The control device, which may remotely control a device of the vehicle, may include a mobile terminal and a vehicle key. In addition, the target object may refer to a driver of the vehicle 410 who may hold the above-mentioned control device to facilitate positioning, including a vehicle owner or a non-owner who, likewise, uses the vehicle control system 400.

The server 440 may acquire the current position of the target object 420 by using the mobile terminal 430, and acquire the parking position of the vehicle 410, then calculate the probability of the target object 420 approaching the vehicle 410 according to the current position and the parking position, then determine whether the target object 420 is approaching the vehicle, and when it is determined that the target object 420 is approaching the vehicle, send a control instruction to the vehicle 410, so that the vehicle 410 remotely controls the vehicle 410 based on the control instruction after receiving the control instruction. Various embodiments of the present invention will be described in detail below with reference to the accompanying drawings.

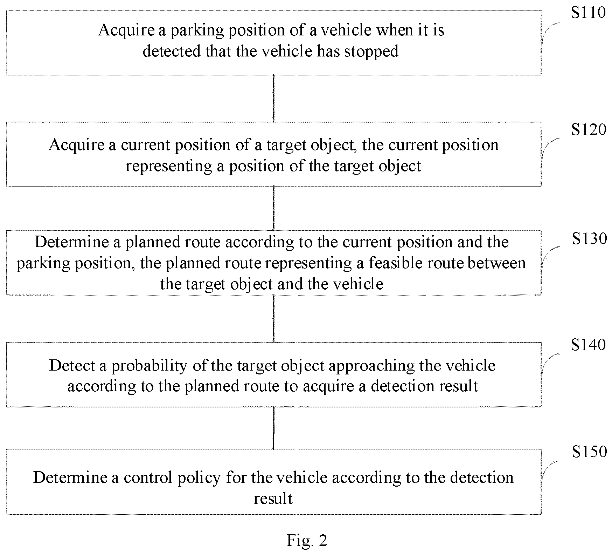

FIG. 2 shows a method for vehicle control provided as an example. The method for vehicle control may include the following steps S110 to S150.

Step S110: a parking position of a vehicle is acquired when it is detected that the vehicle has stopped.

Most of the existing vehicle remote control technologies use a client terminal to remotely and manually control an internal device of a vehicle, and in order to automatize vehicle remote control, it is possible to detect an intention of a target object to approach the vehicle based on the parking position of the vehicle, and automatically wake up a vehicle-mounted device based on the result of the detection, so that the vehicle is pre-controlled before the target object enters the vehicle.

The parking position of the vehicle is acquired when it is detected that the vehicle has stopped. When the vehicle stops, the location of the vehicle may be acquired by a positioning apparatus having a positioning function. For example, the vehicle may be configured with a vehicle-mounted Global Navigation Satellite System (GNSS), and when the vehicle stops, it is possible to acquire the parking position of the current vehicle based on the GNSS of the vehicle and upload the parking position to a server via the vehicle-mounted Telematics Box (T-box), so that the server may receive the parking position sent from the vehicle.

In another implementation, at the moment when the vehicle stops, the acquired current position of the driver may be taken as the parking position of the vehicle. For example, when the vehicle stops, the vehicle may acquire, from a mobile terminal used by the target object via a Wireless Local Area Network (WLAN) in the vehicle, the current position of the driver as the parking position of the vehicle.

Step S120: a current position of a target object is acquired, the current position representing a position of the target object.

When the parking position of the vehicle is acquired, it is possible to predict whether the target object intends to approach the vehicle according to the position of the target object and the parking position, so that the vehicle automatically controls the vehicle-mounted device in advance. In order to protect the privacy rights of the target object, the consent of the target object is required for the acquisition of the current position of the target object, and the current position of the target object can be acquired only after the target object grants the permission to share the position. If the permission to share the position fails to be obtained from the target object, the current position does not continue to be acquired.

When the target object grants the permission to share the position, the position, that is, the current position, of the target object may be acquired in real time from a mobile terminal of the target object. For example, the server may send a request for acquiring the current position to the mobile terminal of the target object via a mobile network. If the target object allows the mobile terminal to share its position, the mobile terminal may send the current position of the target object to the server, so that the server acquires the current position.

Step S130: a planned route is determined according to the current position and the parking position, the planned route representing a feasible route between the target object and the vehicle.

In order to achieve the effect that the target object does not need to remotely and manually control a vehicle-mounted device, a feasible route, i.e., a planned route, between the target object and the vehicle is generated based on the acquired current position of the target object and the parking position of the vehicle, so as to determine whether the target object intends to approach the vehicle, so that the vehicle-mounted device may be automatically controlled in advance while the target object approaching the vehicle.

The planned route refers to at least one feasible route between the target object and the parking position. When the target object stops the vehicle and leaves, a planned route between the current position and the parking position of the target object may be calculated in real time according to the current position and the parking position.

After the target object stops the vehicle and leaves, an activity trajectory of the target object after leaving the vehicle may be acquired in real time according to the current position of the target object, and then a planned route of the target object from the current position to the parking position may be calculated in reverse according to the activity trajectory. For example, after the target object is stops the vehicle and leaves, the server may acquire the position of the target object from the mobile terminal of the target object in real time, so as to obtain the activity trajectory of the target object according to the position of the target object, and transpose the starting point of the activity trajectory and use the activity trajectory as the route that the target object may take when returning to the vehicle, that is, a planned route.

In another implementation, after the target object stops the vehicle and leaves, the vehicle may acquire the current position of the target object, determine the activity position of the target object according to the current position, then acquire history activity data of the target object at the activity position, and further, generate the planned route of the target object from the current position to the parking position according to the history activity data. For example, the planned route may be predicted based on a large amount of history activity data using deep learning (DL)/machine learning (ML).

Step S140: the probability of the target object approaching the vehicle is detected according to the planned route to acquire a detection result.

After the planned route is determined based on the current position and the parking position, it is possible to detect whether the target object intends to approach the vehicle based on the planned route, that is, to detect the probability of the target object approaching the vehicle, so that when it is determined that the target object intends to approach the vehicle, the vehicle-mounted device may be automatically controlled.

When it is detected that the target object is approaching in the parking position direction, the movement route of the target object approaching the parking position during a period of time is compared with the planned route to detect the probability of the target object approaching the vehicle and acquire the detection result. Specifically, when it is determined based on the current position of the target object that the target object is approaching the parking position of the vehicle, a movement route of the target object within a certain period of time may be continuously acquired. The certain period of time may be a fixed period of time set in advance (for example, the certain period of time may be set to a time period, such as one minute, after it is determined that the target object is approaching the parking position), or may be calculated according to the distance between the current position and the parking position and the movement speed of the target object.

Further, it is possible to analyze the degree of matching between the movement route and the planned route, and detect the probability of the target object approaching the vehicle according to the degree of matching, to obtain the detection result. It should be noted that the matching of the movement route with the planned route does not mean that the movement route is completely consistent with the planned route. In some application scenarios, the movement route may completely match with the planned route, or may only partially match with the planned route because the acquired movement route is relatively short.

Specifically, a mapping, that is, a corresponding relationship, may be established between the matching degree of the movement route and the planned route and the probability of the target object approaching the vehicle, so that when the matching degree is given, the probability corresponding to the matching degree may be obtained based on the corresponding relationship. For example, there is a corresponding relationship *f* between the matching degree *x* and the probability *y,* denoted as *y*=*f*(x), where the corresponding relationship *f* may be calculated from a large amount of data of the matching degree and the probability, for example, using a regression analysis.

Further, the degree value may be preset to indicate when a certain matching degree between the movement route and the planned route is reached, it will be considered that the probability of the target object approaching the vehicle has met the requirement of determining that the detection result is that the target object is approaching the vehicle. For example, the degree value is set to 60%, and when the matching degree between the movement route and the planned route is 70%, which is greater than the degree value 60%, the probability of the target object approaching the vehicle may be considered to have met the requirement of determining that the detection result is that the target object is approaching the vehicle. In addition, a probability detection model may be obtained by using a neural network and taking the data of the matching degree and the probability as a training set.

Step S150: a control policy for the vehicle is determined according to the detection result.

When the target object goes to the parking position to drive the vehicle, the target object tends to manually control the vehicle using a mobile phone client in advance. However, the target object often forgets to control the vehicle-mounted device in advance, and therefore may inconvenience the target object in using the vehicle.

When the probability of the target object approaching the vehicle is detected for the target object, the control policy for the vehicle is determined according to the obtained detection result, so that the vehicle-mounted device is automatically controlled while the target object approaching the vehicle, without the need for the target object to manually control the vehicle-mounted device. The control policy refers to a control operation performed on the vehicle according to the result of the probability detection. Specifically, the control policy may be to start a specified vehicle-mounted device before the target object arrives at the parking position.

After the probability of the target object approaching the vehicle is detected, a control policy for the vehicle is determined according to the detection result. Specifically, when the detection result is that the target object is approaching the vehicle, the step of determining the control policy may include: controlling a vehicle-mounted device commonly used by the target object specifically according to the usage habit of the target object, and/or controlling the vehicle-mounted device to improve the vehicle cabin environment according to environmental data in the vehicle cabin.

For example, when it is determined that the target object is approaching the vehicle, the server may acquire the temperature value in the vehicle using a vehicle-mounted sensor, and when the temperature value in the vehicle is not within the range of a preset temperature value, the server may send an air conditioning control instruction to the vehicle, so that the vehicle turns on the air conditioner to control the temperature in the vehicle cabin within the range of the preset temperature value after receiving the air conditioning control instruction.

The parking position of the vehicle is acquired when it is detected that the vehicle has stopped; the current position of the target object is acquired; a planned route is determined according to the current position and the parking position; and the probability of the target object approaching the vehicle is detected according to the planned route to acquire a detection result; and further a control policy for the vehicle is determined according to the detection result. Therefore, a planned route is determined by positioning the vehicle and the target object, and the probability of the target object approaching the vehicle is detected according to the planned route, so that the vehicle is automatically controlled based on the result of the probability detection, thereby greatly reducing the inconvenience of the driver in using the remote control of the vehicle.

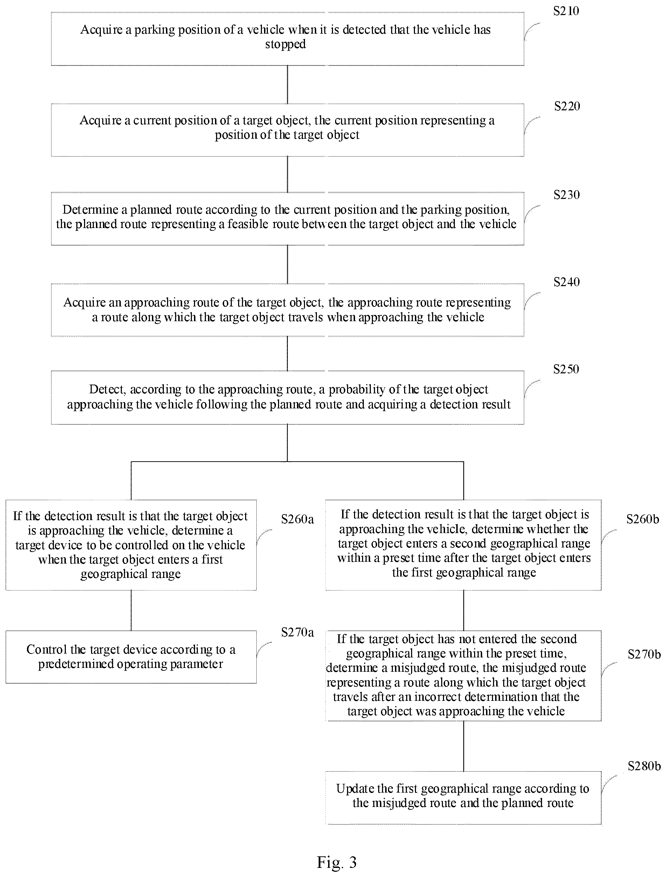

FIG. 3 schematically shows a method for vehicle control provided by an embodiment of the present invention, which may include the following steps S210 to S280.

Step S210: a parking position of a vehicle is acquired when it is detected that the vehicle has stopped.

Step S220: a current position of a target object is acquired, the current position representing a position of the target object.

Step S230: a planned route is determined according to the current position and the parking position, the planned route representing a feasible route between the target object and the vehicle.

The specific implementation of steps S210, S220 and S230 is similar to steps S110, S120 and S130 in the above example respectively and will not be described herein again.

When the planned route of the target object from the current position to the parking position is determined, the probability of the target object approaching the vehicle is detected according to the planned route so as to acquire the detection result. It is possible to acquire a route for the target object keeping approaching the parking position, and compare the route with the planned route to determine whether the target object is approaching the vehicle. Specifically, steps S240 and S250 may be included.

Step S240: an approaching route of the target object is acquired, the approaching route representing a route along which the target object travels when approaching the vehicle.

In order for the vehicle to be able to automatically control a vehicle-mounted device while the target object approaching the vehicle, it is necessary to determine in advance whether the target object is approaching the vehicle. For this reason, when the target object approaches the vehicle, it is possible to determine whether the target object is approaching the vehicle according to the route taken by the target object, and if it is determined that the target object is approaching the vehicle, the vehicle may automatically control the vehicle-mounted device. The approaching route refers to the route that the target object takes when keeping approaching the parking position.

It is possible to periodically acquire the current position of the target object, and determine whether the target object is approaching the vehicle according to the acquired current position at different time points. If it is determined that the target object is approaching the vehicle, the current position of the target object may be acquired in real time so as to obtain the approaching route of the target object.

For example, a server may acquire the current position of the target object using an Android mobile phone of the target object. Specifically, the server may periodically access original GNSS measurement data of a GNSS chipset from the Android mobile phone via an Android Application Programming Interface (API), and determine whether the target object is traveling toward the parking direction based on the GNSS measurement data. If the target object is traveling toward the parking direction, the server may acquire the GNSS measurement data in real time, and generate an approaching route of the target object according to the measurement data. Further, considering that a satellite signal of the geographical position where the target object moves is susceptible to influence, for example, the satellite signal at an underground site is susceptible to influence, the approaching route of the target object may be acquired via a network (e.g., a WLAN).

Step S250: the probability of the target object approaching the vehicle in a planned route is detected according to the approaching route, and a detection result is acquired.

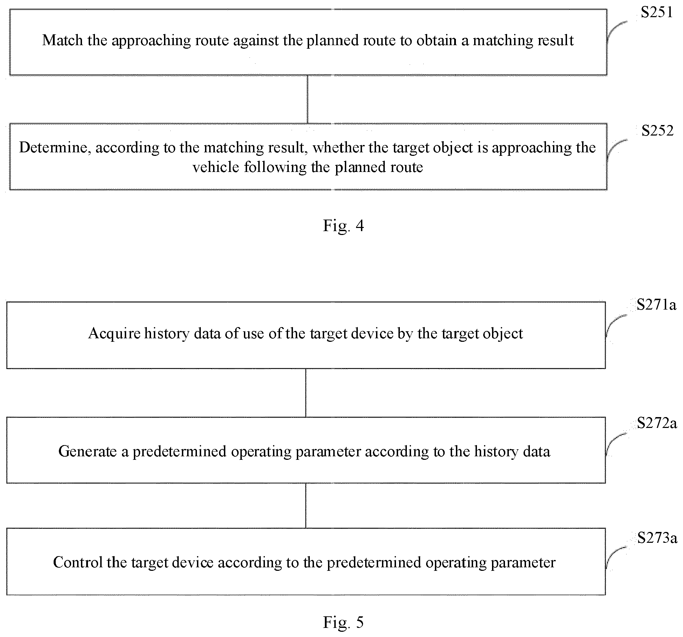

When the approaching route of the target object is acquired, the probability of the target object approaching the vehicle along the planned route may further be detected according to the approaching route, and the detection result may be acquired. Specifically, referring to FIG. 4, step S250 may include steps S251 and S252.

Step S251: the approaching route is matched with the planned route to obtain a matching result.

The vehicle or server may calculate the similarity between the acquired approaching route and the planned route to determine the degree of matching between the approaching route and the planned route. For example, the vehicle may respectively calculate the similarity between the approaching routes acquired at different time points and the planned route, and specifically, may vectorize the approaching routes and the planned route to obtain corresponding trajectory vectors (Trajectory Embedding).

Further, the cosine similarity between the trajectory vectors of the approaching routes at different time points and the trajectory vector of the planned route may be calculated respectively, and as the time passes, the degree of matching between the approaching routes and the planned route may be determined according to the trend of variation of the result of cosine similarity calculation, and then whether the target object is approaching the vehicle along the planned route may be determined.

Step S252: whether the target object is approaching the vehicle along the planned route is determined according to the matching result.

When the approaching route matches the planned route, if the distance between the current position and the parking position gradually decreases, the detection result is that the target object is approaching the vehicle. For example, the cosine similarity between the trajectory vectors of the approaching routes at different time points and the trajectory vector of the planned route is calculated, and as the time passes, the cosine similarity gradually increases, thereby determining that the approaching route matches the planned route. Further, if the distance between the current position and the parking position gradually decreases, it may be determined that the target object is approaching the vehicle along the planned route.

In another implementation, when the approaching route matches the planned route, if the distance between the current position and the parking position does not change significantly or increases, the detection result is that the target object is not approaching the vehicle. For example, according to the cosine similarity calculation, after it is determined that the approaching route matches the planned route and the distance between the current position and the parking position does not gradually decrease or increases, it may be determined that the target object is not approaching the vehicle along the planned route.

In another implementation, when the approaching route does not match the planned route, it may be directly determined that the target object is not approaching the vehicle along the planned route.

Step S260a: if the detection result is that the target object is approaching the vehicle, a target device to be controlled on the vehicle is determined when the target object enters a first geographical range.

After it is determined that the target object is approaching the vehicle, the vehicle-mounted device may be controlled in advance so that the vehicle can automatically turn on related functions and then adjust the vehicle to an appropriate state before the target object starts driving. In order to control the vehicle-mounted device more accurately, the vehicle-mounted device may be controlled in advance only when the target object is within a certain range from the vehicle, i.e., the first geographical range. On the one hand, second determination may be performed as to whether the target object is approaching the vehicle through the first geographical range, to ensure the accuracy of probability detection. On the other hand, the vehicle-mounted device is controlled only when the target object enters the first geographical range, rather than when it is determined that the target object is approaching the vehicle, so that the energy consumption of the vehicle may be reduced to a certain extent.

The first geographical range refers to a minimum range in which the target object needs to approach the vehicle when controlling the vehicle. The size of the first geographical range may be adjusted according to the environment in which the vehicle is parked. For example, when the vehicle is parked in an open parking lot, because the degree of matching between the approaching route of the target object and the planned route is relatively high, and the difficulty of the probability detection of the target object approaching the vehicle is relatively low, the first geographical range may be appropriately enlarged (for example, the first geographical range may be a range centered on the vehicle and having a radius of 200 meters). When the vehicle is parked in a parking lot with a small area, the result of the probability detection may be affected by the parking lot restriction, and therefore the first geographical range may be appropriately reduced (for example, the first geographical range may be a range centered on the vehicle and having a radius of 70 meters) so as to improve the accuracy of the final probability detection. In addition, the first geographical range may be automatically updated and adjusted according to data of multiple times of misjudgment of the target object approaching the vehicle. For detailed description, refer to step S280b.

When it is detected that the target object is approaching the vehicle, if it is detected that the target object has entered the first geographical range, a target device to be controlled on the vehicle may be determined according to the driving habit of the target object. Specifically, history usage data of the vehicle-mounted device by the target object when normally driving the vehicle may be acquired, so as to determine the target device to be controlled on the vehicle according to the history usage data. The target device may be a vehicle-mounted device, including at least an air conditioner, a vehicle lamp, and a seat heater, or may be an accessory of the vehicle, including at least an engine and a wiper.

When the target object enters the first geographical range, it is possible to acquire the history usage data of the vehicle-mounted device by the target object when driving, and further, determine whether a current operating parameter of the vehicle-mounted device achieves an actual operating parameter in the history usage data, and determine a vehicle-mounted device that does not achieve the actual operating parameter in the history usage data as the target device to be controlled.

For example, the vehicle may acquire, from the server, the history usage data of the vehicle-mounted device by the target object when it is detected that the target object enters the first geographical range, the history usage data may include an operating parameter of a seat used by the target object, and when it is detected that the current operating parameter of the seat does not conform to the operating parameter of the seat when normally used by the target object, the seat may be determined as the target device to be controlled.

In another implementation, when the target object enters the first geographical range, it is possible to acquire the operating parameter set by the target object for the vehicle-mounted device, and determine the vehicle-mounted device that does not achieve the set operating parameter as the target device to be controlled. For example, the target object sets the front lamp of the vehicle to be turned on when the target object approaches the vehicle, and when the target object enters the first geographical range, the front lamp of the vehicle that is not turned on may be determined as the target device to be controlled.

When it is detected that the target object is approaching the vehicle, if it determined that the target object has entered the first geographical range, a target device to be controlled on the vehicle may be determined according to the vehicle state. For example, the temperature inside the vehicle cabin may be acquired when the target object enters the first geographical range, and if the temperature inside the vehicle cabin is not favorable for the target object to drive, the air conditioner of the vehicle may be determined as the target device to be controlled so as to adjust the temperature in the vehicle cabin.

Step S270a: the target device is controlled according to a predetermined operating parameter.

After the target object enters the first geographical range and the target device to be controlled on the vehicle is determined, the target device may be controlled according to the predetermined operating parameter. The predetermined operating parameter may be generated from the history data of use of the target device by the target object, so as to control the target device according to the predetermined operating parameter. Specifically, referring to FIG. 5, step S270a may include steps 271a-273a.

Step S271a: history data of use of the target device by the target object is acquired.

The history data of use of the target device by the target object may be stored locally or in the server, and after determining the target device to be controlled on the vehicle, the vehicle may acquire the history data of use of the target device locally or from the server.

Step S272a: a predetermined operating parameter is generated according to the history data.

The predetermined operating parameter may be generated according to a large amount of history usage data of the target device, and the predetermined operating parameter is an operating parameter that the target device needs to achieve when operating. Specifically, a large amount of history usage data may be analyzed to obtain a preference of the target object for using the target device, and the predetermined operating parameter may be generated according to the preference. For example, if the air conditioner temperature of the target object is controlled at about α degrees Celsius every day in summer, the preference of the target object for using the air conditioner is obtained through big data analysis as α degrees Celsius, and α degrees Celsiusα is used as a predetermined operating parameter of the air conditioner.

Step S273a: the target device is controlled according to the predetermined operating parameter.

After the predetermined operating parameter is generated according to the history data, the vehicle may control the target device to operate so as to achieve the predetermined operating parameter. For example, the air conditioner of the vehicle is controlled to reach α degrees Celsius.

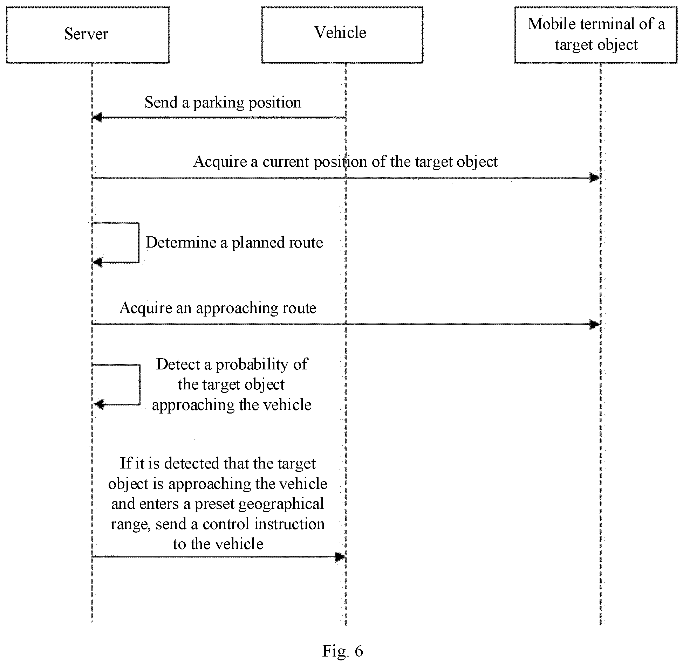

For example, FIG. 6 shows a time sequence of a method for vehicle control provided as an example. When a planned route between a target object and a parking position is generated according to the parking position and a current position, the probability of the target object approaching the vehicle along the planned route may be detected according to an acquired approaching route. Specifically, when a vehicle is stopped, the parking position of the vehicle may be sent to a server, and the server may acquire the current position of the target object from the movement of the target object.

Further, the server may determine the planned route between the target object and the vehicle according to the current position and the parking position. Then, the approaching route of the target object approaching the parking position is acquired, so that the probability of the target object approaching the vehicle along the planned route is detected according to the approaching route.

Further, if it is detected that the target object is approaching the vehicle, when the target object enters a first geographical range, the server sends a control instruction to the vehicle, so that the vehicle may determine a target device to be controlled according to the control instruction, and control the target device according to a predetermined operating parameter.

Step S260b: if the detection result is that the target object is approaching a vehicle, whether the target object enters a second geographical range within a preset time is determined after the target object enters the first geographical range.

The probability of the target object approaching the vehicle is detected according to the planned route and the approaching route. Although whether the target object is approaching the vehicle can be determined by determining the degree of matching between the approaching route of the target object and the planned route, in an actual application scenario, a match between the approaching route of the target object and the planned route does not necessarily mean the target object is approaching the vehicle. Therefore, misjudgment in the probability detection of the target object approaching the vehicle may occur. For example, the target object enters the first geographical range, and then just passes by the parking lot.

In order to reduce the likelihood of incorrect determination that the target object is approaching the vehicle, the incorrect determination may be corrected by re-determining the first geographical range. The preset time refers to a time during which the target object can normally arrive at the second geographical range after the target object enters the first geographical range, and the preset time may be calculated according to the distance from the current position of the target object to the second geographical range and the speed at which the target object moves. The second geographical range is used to determine whether misjudgment occurs in the probability detection of the target object approaching the vehicle, and the second geographical range is smaller than the first geographical range, or the second geographical range is included in the first geographical range.

When it is detected that the target object is approaching the vehicle, if it is detected that the target object has entered the first geographical range, whether the target object enters the second geographical range within a preset time may be determined. Specifically, after the target object enters the first geographical range, the preset time may be calculated according to the movement speed of the target object and the distance from the target object to the parking position, and further, whether the target object enters the second geographical range within the preset time may be detected.

Step S270b: if the target object has not entered the second geographical range within the preset time, a misjudged route is determined, the misjudged route representing a route along which the target object travels after it is misjudged that the target object is approaching the vehicle.

When it is detected that the target object has entered the first geographical range, if it is determined that the target object has not entered the second geographical range within the preset time, a misjudged route is determined. Specifically, if it is determined that the target object has not entered the second geographical range within the preset time, it is determined that misjudgment occurs in the step of determining the target object approaching the vehicle, and therefore, the approaching route of the target object may be taken as a misjudged route. For example, if it is determined that a vehicle owner has not entered the second geographical range (a 2 m range) within the preset time after the vehicle owner have entered the first geographical range (a 200 m range), a misjudged route is determined.

In another implementation, when it is detected that the target object is approaching the vehicle, if it is detected that the target object has entered the first geographical range, it is possible to determine whether the probability detection is correct based on whether the distance between the target object and the parking position is the same as an expected distance within the preset time. If the distance between the target object and the parking position is different from the expected distance, a misjudged route is determined.

In still another implementation, after the target object enters the first geographical range, it is possible to determine whether the target object opens a vehicle door within a preset time, thereby determining whether misjudgment occurs in the probability detection of the target object approaching the vehicle. Specifically, when it is detected that the target object has entered the first geographical range, if it is determined that the target object does not open the vehicle door within the preset time, a misjudged route is determined.

Step S280b: the first geographical range is updated according to the misjudged route and the planned route.

After the misjudged route is acquired, the misjudged route may be compared with the planned route so as to recalculate a first geographical range which is more suitable for determining whether the target object is approaching the vehicle. Specifically, when multiple times of misjudgment occur in the detection of probabilities of the target object approaching the vehicle, misjudged routes along which the target object travels during the multiple times of misjudgment may be acquired, and the first geographical range may be updated based on the misjudged routes by using the deep learning or big data analysis technology.

For example, when the server detects that there are more than two times of misjudgment in the probability of the target object approaching the vehicle, the server may take the misjudged routes and the planned route of the target object as a training set to construct a neural network model for the prediction of the target object approaching the vehicle using Generative Adversarial Networks (GANs), input the training set composed of a large number of misjudged routes and the planned route into the neural network model for training, so as to obtain the neural network model that can be accurately used for predicting the target object approaching the vehicle, and calculate a new first geographical range by using the neural network model.

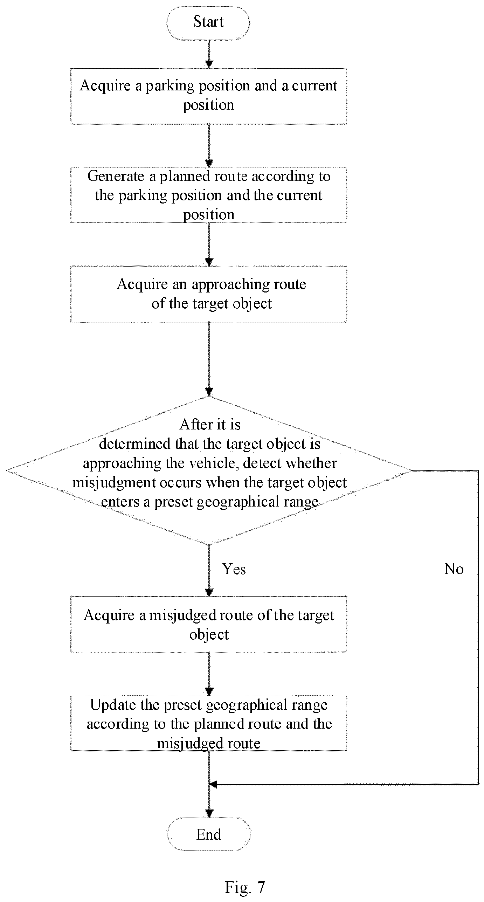

For example, FIG. 7 shows a flow chart of a method for vehicle control provided by an embodiment of the present invention. The first geographical range may be updated and adjusted when multiple times of misjudgment occur in the probability detection of the target object approaching the vehicle. Specifically, after the parking position of the vehicle and the current position of the target object are acquired, the planned route between the target object and the parking position is generated according to the parking position and the current position.

Further, the approaching route of the target object when approaching the vehicle is acquired, and whether the target object is approaching the vehicle is determined according to the approaching route and the planned route. If it is determined that the target object is approaching the vehicle, it may continue to determine whether the target object enters a preset range. When the target object enters the preset range, it may detect whether misjudgment occurs in the step of determining that the target object is approaching the vehicle, for example, determining whether a vehicle door is open within a preset time, and if the vehicle door is not open, a misjudged route of the target object is acquired, and a new first geographical range is generated according to the misjudged route and the planned route. If the vehicle door is open, that is, no misjudgment occurs, the current first geographical range is maintained.

The parking position of the vehicle is acquired when it is detected that the vehicle has stopped, the current position of the target object is acquired, and the planned route is determined according to the current position and the parking position. Further, the approaching route of the target object is acquired, and the probability of the target object approaching the vehicle along the planned route is detected according to the approaching route. If the detection result is that the target object is approaching the vehicle, the target device to be controlled on the vehicle is determined when the target object enters the first geographical range, and the target device is controlled according to the predetermined operating parameter. Thus, the planned route from the current position to the vehicle is calculated according to the position of the target object, and when the route along which the target object travels conforms to the planned route and the distance from the target object to the vehicle is within the preset range, a vehicle automatic adjustment function may be activated in advance by waking up a relevant vehicle-mounted device via the network.

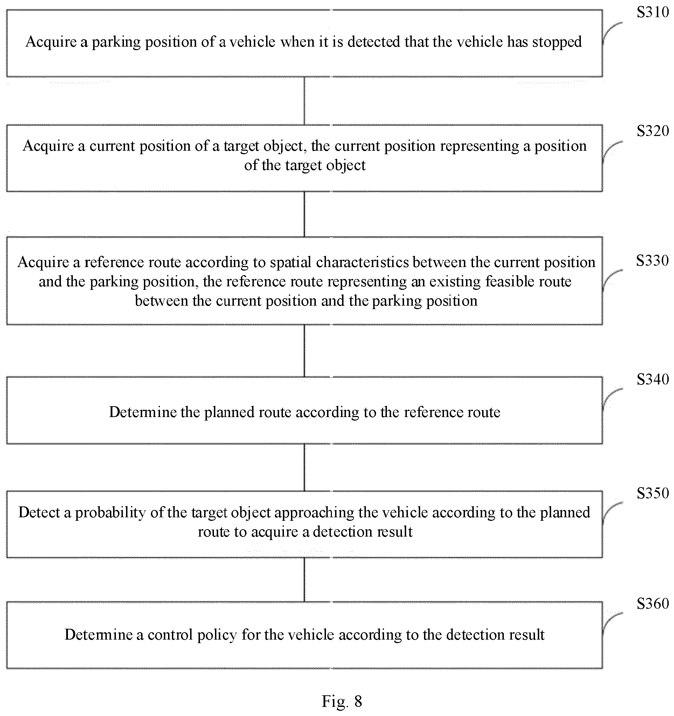

FIG. 8 schematically shows a method for vehicle control provided by an embodiment of the present invention, which may include the following steps S310 to S360.

Step S310: a parking position of a vehicle is acquired when it is detected that the vehicle has stopped.

Step S320: a current position of a target object is acquired, the current position representing a position of the target object.

Implementation of steps S310 and S320 is similar to steps S110 and S120 provided of the above example respectively and will not be described herein again.

Step S330: a reference route is acquired according to spatial characteristics between the current position and the parking position, the reference route representing an existing feasible route between the current position and the parking position.

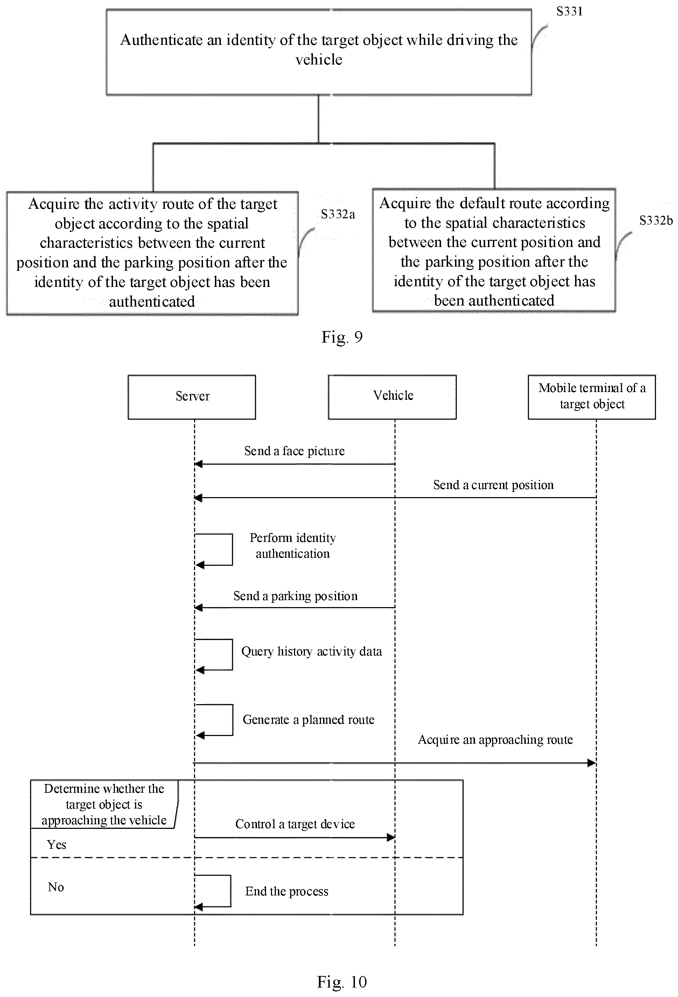

The spatial characteristics refer to features of a specific geographical space between the current position and the parking position and may include map information between the current position and the parking position. An existing reference route between the current position and the parking position may be acquired according to the spatial characteristics, and the reference route includes an activity route of the target object as well as a default route. Specifically, referring to FIG. 9, step S330 may include steps S331, S332a, and S332b.

Step S331: identity authentication is performed on the target object while driving the vehicle.

In order to accurately detect the probability of the target object approaching the vehicle, identity authentication may be performed on the target object during the driving process, so as to acquire history activity data and vehicle-mounted device usage data corresponding to the target object. It should be noted that the target object may be either a vehicle owner or a temporary driver, and the history activity data and the vehicle-mounted device usage data of the driver currently using the vehicle may be specifically acquired based on user identification.

The vehicle may acquire a facial image of the target object using a vehicle-mounted camera and perform identity authentication on the target object according to the facial image while driving the vehicle. Specifically, when it is detected that the engine starts to work, the vehicle may acquire the facial image of the target object using the camera, and then extract a facial feature from the acquired facial image based on a facial recognition (FR) algorithm, for example, a You Only Look Once (YOLO) algorithm, so as to perform identity authentication according to the facial feature.

Step S332a: after the identity of the target object has been authenticated, an activity route of the target object is acquired according to the spatial characteristics between the current position and the parking position.

After the identity of the target object is authenticated, the activity route of the target object may be acquired, and then a planned route may be generated according to the activity route so as to detect the probability of the target object approaching the vehicle. The activity route refers to a route along which the target object travels when approaching the vehicle at a specific activity location.

After the identity of the target object is authenticated, the current position of the target object may be acquired, the activity location of the target object may be determined according to the current position, and then the activity route along which the target object travels when approaching the vehicle at the activity location may be acquired. For example, when acquiring the current position of the target object, the vehicle may determine that the activity location of the target object is a company's premise, and since the identity of the target object is authenticated, the activity route of the target object in the company's premise may be retrieved from the server.

Step S332b: after the identity of the target object has been authenticated, a default route is acquired according to the spatial characteristics between the current position and the parking position.

In a special case, although the identity of the target object is authenticated, the history activity data and the vehicle-mounted device usage data corresponding to the target object cannot be acquired. For example, a new user using the vehicle control system does not have history activity data and vehicle-mounted device usage data, and in this case, a planned route may be generated by acquiring the default route. The default route refers to an optimal route between the current position and the parking position which may include a feasible route, a shortest route, and the like.

After the identity of the target object is authenticated, the geographical information about the position of the target object may be acquired according to the current position, and the default route between the current position and the parking position may be determined according to the geographical information. For example, after the identity of the target object is authenticated, the vehicle sends, to the server, a request for acquiring history activity data of the target object, and if the server does not find the history activity data, the request fails. In this case, the vehicle may determine that the target object is in a shopping mall according to the current position, and determine, by acquiring an indoor navigation map of the shopping mall, the feasible route between the current position and the parking position as the default route.

Step S340: a planned route is determined according to the reference route.

The reference route may include an activity route from which the vehicle may generate a planned route for the target object to arrive at the parking position. Specifically, since the activity route includes a large number of routes along which the target object frequently travels when approaching the vehicle, the planned route may be predicted from the history activity data using big data, deep learning, and machine learning.

For example, after the target object stops the vehicle and leaves, the vehicle may determine, via the mobile network, that the current position of the target object is the workplace of the target object, and then acquire the activity route of the target object in the workplace from the local memory or the server, and further input the activity route, as a training set, into a Long Short Term Memory (LSTM) network to obtain a trajectory prediction model, so as to generate the planned route according to the trajectory prediction model.

**In** another implementation, the reference route may include a default route from which the vehicle may generate a planned route for the target object to arrive at the parking position. For example, the vehicle determines that the current position of the target object is a large shopping mall, and in this case, multiple feasible routes and the default route from the current position to the parking position may be acquired, and a planned route may be determined according to the multiple feasible routes.

Step S350: the probability of the target object approaching the vehicle is detected according to the planned route to acquire a detection result.

Step S360: a control policy for the vehicle is determined according to the detection result.

Implementation of steps S350 and S360 is similar to steps S140 and S150 provided in the above example respectively and will not be described herein again.

For example, FIG. 10 shows a time sequence diagram of a method for vehicle control provided by an embodiment of the present invention. The server may acquire the reference route according to the current position and the parking position, determine the planned route according to the reference route, and then detect the probability of the target object approaching the vehicle. Specifically, the vehicle and the mobile terminal of the target object may respectively communicatively connect to the server via a network.

The vehicle may collect a facial picture of the target object in the process of driving and send it to the server for identity authentication. When the vehicle is stopped, the parking position may be sent to the server. The mobile terminal may acquire the current position of the target object and send it to the server.

Further, after the identity of the target object is authenticated by the server, it is possible to query whether history activity data of the target object exists. If the history activity data of the target object exists, the activity route is acquired from the history activity data as the reference route. If the history activity data of the target object does not exist, the default route may be acquired as the reference route according to the current position.

Further, the server may determine the planned route according to the reference route, and acquire the approaching route of the target object from the mobile terminal, so as to detect the probability of the target object approaching the vehicle along the planned route according to the approaching route. If the detection result is that the target object is approaching the vehicle, a target device to be controlled on the vehicle is determined, and the target device is controlled according to a predetermined operating parameter.

The parking position of the vehicle is acquired when it is detected that the vehicle has stopped, the current position of the target object is acquired, and the reference route is acquired according to the spatial characteristics between the current position and the parking position. Identity authentication is performed on the target object while driving the vehicle, and after the identity of the target object has been authenticated, the activity route or the default route of the target object is acquired as the reference route according to the spatial characteristics between the current position and the parking position. The planned route is determined according to the reference route, and the probability of the target object approaching the vehicle is detected by using the planned route, to acquire the detection result, and determine the control policy for the vehicle according to the detection result. As such, the history activity route of the target object is accurately acquired through identity authentication, and then the probability of the target object approaching the vehicle is detected according to the activity route, so that trajectory prediction and automatic control of the vehicle are combined to greatly improve the efficiency of the remote automatic control of the vehicle.

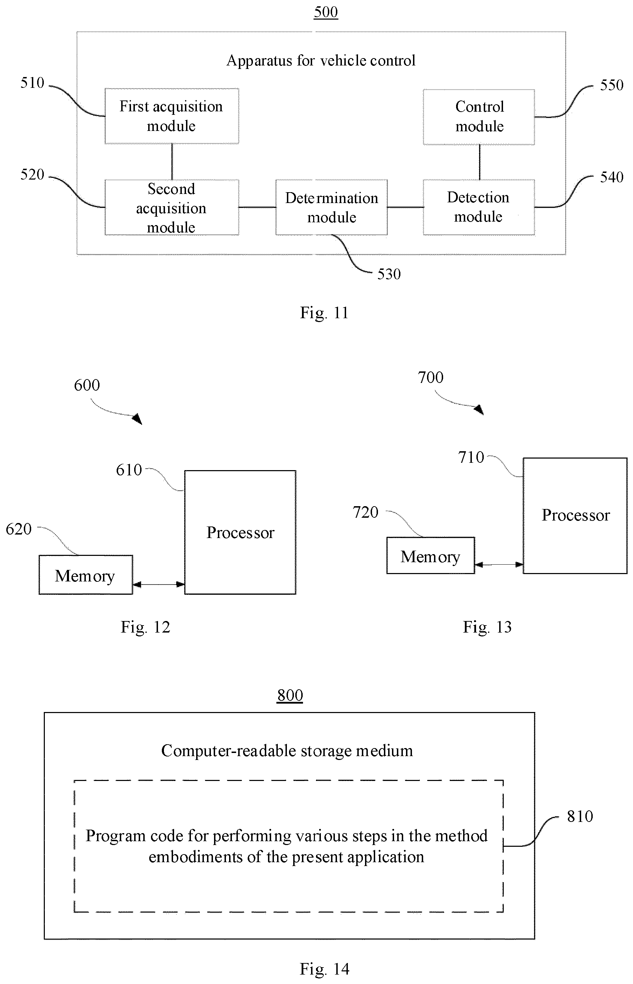

FIG. 11 shows a structural block diagram of an apparatus for vehicle control 500 provided by an embodiment of the present invention. The apparatus for vehicle control 500 includes a first acquisition module 510, a second acquisition module 520, a determination module 530, a detection module 540, and a control module 550. The first acquisition module 510 is used for acquiring a parking position of a vehicle when it is detected that the vehicle has stopped; the second acquisition module 520 is used for acquiring a current position of a target object, the current position representing a position of the target object; the determination module 530 is used for determining a planned route according to the current position and the parking position, the planned route representing a feasible route between the target object and the vehicle; the detection module 540 is used for detecting the probability of the target object approaching the vehicle according to the planned route to acquire a detection result; and the control module 550 is used for determining a control policy for the vehicle according to the detection result.

The detection module 540 may include: an acquisition unit for acquiring an approaching route of the target object, the approaching route representing a route along which the target object travels when approaching the vehicle; and a detection unit for detecting the probability of the target object approaching the vehicle along the planned route according to the approaching route, and acquiring the detection result.

The detection unit may be specifically used for: matching the approaching route with the planned route to obtain a matching result; and determining, based on the detection result, whether the target object is approaching the vehicle along the planned route, wherein when the approaching route matches the planned route, if the distance between the current position and the parking position gradually decreases, the detection result is that the target object is approaching the vehicle.

The control module 550 may further include: a determination unit for determining, if the detection result is that the target object is approaching the vehicle, a target device to be controlled on the vehicle when the target object enters a first geographical range; and a control unit for controlling the target device according to a predetermined operating parameter.

The detection module 540 may further include:
a target object approaching determination unit for determining, if the detection result is that the target object is approaching the vehicle, whether the target object enters a second geographical range within a preset time after the target object enters the first geographical range; a misjudged route determination unit for determining a misjudged route if the target object has not entered the second geographical range within the preset time, the misjudged route representing a route along which the target object travels after it is misjudged that the target object is approaching a vehicle; and an update unit for updating the first geographical range according to the misjudged route and the planned route.

The control unit is further specifically used for: acquiring history data of use of the target device by the target object; generating a predetermined operating parameter according to the history data; and controlling the target device according to the predetermined operating parameter.

The determination module 530 may include: a reference route acquisition unit for acquiring a reference route according to spatial characteristics between the current position and the parking position, the reference route representing an existing feasible route between the current position and the parking position; and a planned route determination unit for determining a planned route according to the reference route.

The reference route includes an activity route representing an activity route for the target object to arrive at the current position after stopping the vehicle and leaving, and the reference route acquisition unit may be specifically used for performing identity authentication on the target object while driving the vehicle; and after the identity of the target object has been authenticated, acquiring the activity route of the target object according to the spatial characteristics between the current position and the parking position. The planned route determination unit may be further specifically used for generating a planned route from the target object to the parking position according to the activity route.

The reference route includes a default route that includes at least a shortest route from the current position to the parking position. The reference route acquisition unit may be further specifically used for performing identity authentication on the target object while driving the vehicle; and acquiring a default route according to the spatial characteristics between the current position and the parking position after the identity of the target object has been authenticated. The planned route determination unit may be further specifically used for generating a planned route from the target object to the parking position according to the default route.

Those skilled in the art will clearly understand that, for convenience and simplicity of description, for the specific working process of the apparatus and modules described above, refer to the corresponding process in the foregoing method embodiments, which will not be described herein again.

The coupling between modules may be electrical, mechanical, or in other forms. **In** addition, each functional module in the embodiments of the present invention may be integrated into one processing module, or each module may exist independently, or two or more modules may be integrated into one module. The integrated module may be implemented in the form of hardware or software function modules.

In the solution provided in the present invention, the parking position of the vehicle is acquired when it is detected that the vehicle has stopped, the current position of the target object is acquired, the planned route is determined according to the current position and the parking position, the probability of the target object approaching the vehicle is detected according to the planned route to acquire the detection result, and further, the control policy for the vehicle is determined according to the detection result. Therefore, the planned route is determined by positioning the vehicle and the target object, and the probability of the target object approaching the vehicle is detected according to the planned route, so that the vehicle is automatically controlled according to the result of the probability detection, thereby greatly reducing the inconvenience of the driver in using the remote control of the vehicle.

As shown in FIG. 12, an embodiment of the present invention further provides a vehicle 600, which includes a processor 610 and a memory 620, and the memory 620 stores computer program instructions that, when invoked by the processor 610, perform the method for vehicle control described above.

The processor 610 may include one or more processing cores. The processor 610 connects various parts of the entire battery management system using various interfaces and lines, and performs various functions and processing data of the battery management system by running or executing instructions, programs, code sets, or instruction sets stored in the memory 620 and invoking data stored in the memory 620. Alternatively, the processor 610 may be implemented in at least one of the hardware forms of a Digital Signal Processor (DSP), a Field-Programmable Gate Array (FPGA), and a Programmable Logic Array (PLA). The processor 610 may be integrated with one or a combination of several of a Central Processing Unit 610 (CPU), a Graphics Processing Unit 610 (GPU), a modem, and the like. The CPU mainly processes an operating system, a user interface, and an application program; the GPU is used for the rendering and drawing of display content; and the modem is used for handling wireless communication. It will be appreciated that the modem described above may also be implemented as a single communication chip without being integrated into the processor 610.

The memory 620 may include a Random Access Memory 620 (RAM) or a Read-Only Memory 620 (ROM). The memory 620 may be used to store instructions, programs, code, code sets, or instruction sets. The memory 620 may include a program storage area and a data storage area, where the program storage area may store instructions for implementing an operating system, instructions for implementing at least one function (such as a touch function, a sound playback function, and an image playback function), instructions for implementing various method embodiments described below, and the like. The data storage area may store data (such as a telephone book, audio and video data, and chat record data) created in the use of an electronic device, and the like.

As shown in FIG. 13, an embodiment of the present invention further provide a server 700, which includes a processor 710 and a memory 720, and the memory 720 stores computer program instructions that, when invoked by the processor 710, perform the method for vehicle control described above.

The processor 710 may include one or more processing cores. The processor 710 connects various parts of the entire battery management system using various interfaces and lines, and performs various functions and processing data of the battery management system by running or executing instructions, programs, code sets, or instruction sets stored in the memory 720 and invoking data stored in the memory 720. Alternatively, the processor 710 may be implemented in at least one of the hardware forms of a Digital Signal Processor (DSP), a Field-Programmable Gate Array (FPGA), and a Programmable Logic Array (PLA). The processor 710 may be integrated with one or a combination of several of a Central Processing Unit 710 (CPU), a Graphics Processing Unit 710 (GPU), a modem, and the like. The CPU mainly processes an operating system, a user interface, and an application program; the GPU is used for the rendering and drawing of display content; and the modem is used for handling wireless communication. It will be appreciated that the modem described above may also be implemented as a single communication chip without being integrated into the processor 710.

The memory 720 may include a Random Access Memory 720 (RAM) or a Read-Only Memory 720 (ROM). The memory 720 may be used to store instructions, programs, code, code sets, or instruction sets. The memory 720 may include a program storage area and a data storage area, where the program storage area may store instructions for implementing an operating system, instructions for implementing at least one function (such as a touch function, a sound playback function, and an image playback function), instructions for implementing various method embodiments described below, and the like. The data storage area may store data (such as a telephone book, audio and video data, and chat record data) created in the use of an electronic device, and the like.

As shown in FIG. 14, an embodiment of the present invention further provide a computer-readable storage medium 800 in which computer program instructions 810 are stored, and the computer program instructions 810 may be invoked by a processor to perform the method described in the embodiments described above.

The computer-readable storage medium 800 may be an electronic memory such as a flash memory, an Electrically Erasable Programmable Read-Only Memory (EEPROM), an EPROM, a hard disk, or a ROM. Alternatively, the computer-readable storage medium 800 includes a non-transitory computer-readable storage medium. The computer-readable storage medium 800 has a storage space for program code that performs any method steps of the method described above. The program code may be read from or written into one or more computer program products. The program code may be compressed, for example, in an appropriate form.

## Claims

1. A method for vehicle control, comprising:
acquiring a parking position of a vehicle when it is detected that the vehicle has stopped (S110, S210, S310);
acquiring a current position of a target object, the current position representing a position of the target object (S120, S220, S320); and
determining a planned route according to the current position and the parking position, the planned route representing a feasible route from the current position of the target object to the parking position of the vehicle (S130, S230);
**characterized in that** the method further comprises:
acquiring an approaching route of the target object, the approaching route representing a route along which the target object travels when approaching the vehicle (S240);
comparing the approaching route with the planned route to obtain a comparison result;
determining, according to the comparison result, a probability that the target object is approaching the parking position of the vehicle following the planned route to acquire a detection result (S250); and
determining a control policy for the vehicle according to the detection result (S150, S360).

2. The method according to claim 1, wherein:
when the approaching route matches the planned route, if a distance between the current position and the parking position gradually decreases, the detection result is that the target object is approaching the parking position of the vehicle;
the step of determining a control policy for the vehicle according to the detection result (S150) comprises:
if the detection result is that the target object is approaching the parking position of the vehicle, determining a target device to be controlled on the vehicle when the target object enters a first geographical range (S260a); and
controlling the target device according to a predetermined operating parameter (S270a).

3. The method according to claim 2, wherein the method further comprises:
if the detection result is that the target object is approaching the parking position of the vehicle, determining whether the target object enters a second geographical range within a preset time after the target object enters the first geographical range (S260b), wherein the second geographical range is within the first geographical range;
if the target object has not entered the second geographical range within the preset time, determining a misjudged route, the misjudged route representing a route along which the target object travels after an incorrect determination that the target object was approaching the vehicle (S270b); and
updating the first geographical range according to the misjudged route and the planned route (S280b).

4. The method according to claim 2, wherein the step of controlling the target device according to a predetermined operating parameter (S270a) comprises:
acquiring history data of use of the target device by the target object (S271a);
generating the predetermined operating parameter according to the history data (S272a); and
controlling the target device according to the predetermined operating parameter (S273a).

5. The method according to claim 1, wherein the step of determining a planned route according to the current position and the parking position (S130, S230) comprises:
acquiring a reference route according to spatial characteristics between the current position and the parking position (S330), the reference route representing an existing feasible route between the current position and the parking position; and
determining the planned route according to the reference route (S340).

6. The method according to claim 5, wherein the reference route comprises an activity route representing a route along which the target object travels to the current position after parking, and the step of acquiring a reference route according to spatial characteristics between the current position and the parking position (S330) comprises:
authenticating an identity of the target object while driving the vehicle (S331); and
acquiring the activity route of the target object according to the spatial characteristics between the current position and the parking position after the identity of the target object has been authenticated (S332a), and
wherein the step of determining the planned route according to the reference route (S340) comprises:
generating the planned route for the target object to arrive at the parking position according to the activity route.

7. The method according to claim 5, wherein the reference route comprises a default route that comprises at least a shortest route from the current position to the parking position, and the step of acquiring a reference route according to spatial characteristics between the current position and the parking position (S330) comprises:
authenticating an identity of the target object while driving the vehicle (S331); and
acquiring the default route according to the spatial characteristics between the current position and the parking position after the identity of the target object has been authenticated (S332b), and
wherein the step of determining the planned route according to the reference route (S340) comprises:
generating the planned route for the target object to arrive at the parking position according to the default route.

8. An apparatus for vehicle control (500), comprising:
a first acquisition module (510) configured to acquire a parking position of a vehicle when it is detected that the vehicle has stopped (S110, S210, S310);
a second acquisition module (520) configured to acquire a current position of a target object, the current position representing a position of the target object (S120, S220, S320); and
a determination module (530) configured to determine a planned route according to the current position and the parking position, the planned route representing a feasible route from the current position of the target object to the parking position of the vehicle (S130, S230);
**characterized in that** the apparatus further comprises:
a detection module (540) configured to: acquire an approaching route of the target object, the approaching route representing a route along which the target object travels when approaching the vehicle (S240); compare the approaching route with the planned route to obtain a comparison result; and determine a probability that the target object is approaching the parking position of the vehicle according to the comparison result to acquire a detection result (S140, S350); and
a control module (550) configured to determine a control policy for the vehicle according to the detection result (S150, S360).

9. The apparatus (500) according to claim 8, wherein:
when the approaching route matches the planned route, if a distance between the current position and the parking position gradually decreases, the detection result is that the target object is approaching the parking position of the vehicle; and
the control module (550) is configured to:
determine a target device to be controlled on the vehicle when the target object enters a first geographical range (S260a), if the detection result is that the target object is approaching the parking position of the vehicle, and
control the target device according to a predetermined operating parameter (S270a).

10. The apparatus (500) according to claim 8, wherein the determination module (530) is configured to:
acquire a reference route according to spatial characteristics between the current position and the parking position (S330), the reference route representing an existing feasible route between the current position and the parking position; and
determine the planned route according to the reference route (S340).

11. A vehicle (600), wherein the vehicle comprises:
memory (620);
one or more processors (610) coupled to the memory (620); and
one or more programs stored in the memory (620), which, when executed by the one or more processors (610), result in performance of the method according to any of claims 1-7.

12. A server (700), wherein the server comprises:
memory (720);
one or more processors (710) coupled to the memory (720); and
one or more programs stored in the memory (720), which, when executed by the one or more processors (710), result in performance of the method according to any of claims 1-7.

13. A computer-readable storage medium (800), comprising program code (810) stored thereon which, when executed by a processor, results in performance of the method according to any of claims 1-7.

## Patentansprüche

1. Verfahren zum Steuern eines Fahrzeugs, umfassend:
Erfassen einer Parkposition eines Fahrzeugs, wenn erkannt wird, dass das Fahrzeug gestoppt hat (S110, S210, S310);
Erfassen einer aktuellen Position eines Zielobjekts, wobei die aktuelle Position eine Position des Zielobjekts repräsentiert (S120, S220, S320); und
Bestimmen einer geplanten Route gemäß der aktuellen Position und der Parkposition, wobei die geplante Route eine gangbare Route von der aktuellen Position des Zielobjekts zur Parkposition des Fahrzeugs repräsentiert (S130, S230);
**dadurch gekennzeichnet, dass** das Verfahren ferner Folgendes umfasst:
Erfassen einer Zugangsroute des Zielobjekts, wobei die Zugangsroute eine Route repräsentiert, entlang welcher sich das Zielobjekt bewegt, wenn es sich auf das Fahrzeug zubewegt (S240);
Vergleichen der Zugangsroute mit der geplanten Route, um ein Vergleichsergebnis zu erhalten;
Bestimmen, gemäß dem Vergleichsergebnis, einer Wahrscheinlichkeit dafür, dass sich das Zielobjekt der geplanten Route folgend auf die Parkposition des Fahrzeugs zubewegt, um ein Erkennungsergebnis zu erhalten (S250); und
Bestimmen einer Steuerungsrichtlinie für das Fahrzeug gemäß dem Erkennungsergebnis (S150, S360).

2. Verfahren nach Anspruch 1, wobei:
wenn die Zugangsroute mit der geplanten Route übereinstimmt, falls eine Distanz zwischen der aktuellen Position und der Parkposition allmählich abnimmt, das Erkennungsergebnis ist, dass sich das Zielobjekt auf die Parkposition des Fahrzeugs zubewegt;
der Schritt des Bestimmens einer Steuerungsrichtlinie für das Fahrzeug gemäß dem Erkennungsergebnis (S150) Folgendes umfasst:
falls das Erkennungsergebnis ist, dass das Zielobjekt sich auf die Parkposition des Fahrzeugs zubewegt, Bestimmen einer Zielvorrichtung, die am Fahrzeug gesteuert werden soll, wenn das Zielobjekt in einen ersten geografischen Bereich eintritt (S260a); und
Steuern der Zielvorrichtung gemäß einem vorherbestimmten Betriebsparameter (S270a).

3. Verfahren nach Anspruch 2, wobei das Verfahren ferner Folgendes umfasst:
falls das Erkennungsergebnis ist, dass das Zielobjekt sich auf die Parkposition des Fahrzeugs zubewegt, Bestimmen, ob das Zielobjekt in einen zweiten geografischen Bereich innerhalb einer voreingestellten Zeit nach dem Eintritt des Zielobjekts in den ersten geografischen Bereich eintritt (S260b), wobei der zweite geografische Bereich innerhalb des ersten geografischen Bereichs liegt;
falls das Zielobjekt nicht innerhalb der voreingestellten Zeit in den zweiten geografischen Bereich eingetreten ist, Bestimmen einer fehleingeschätzten Route, wobei die fehleingeschätzte Route eine Route repräsentiert, entlang welcher sich das Zielobjekt nach einer inkorrekten Bestimmung, dass das Zielobjekt sich auf das Fahrzeug zubewegte, bewegt (S270b); und
Aktualisieren des ersten geografischen Bereichs gemäß der fehleingeschätzten Route und der geplanten Route (S280b).

4. Verfahren nach Anspruch 2, wobei der Schritt des Steuerns der Zielvorrichtung gemäß einem vorherbestimmten Betriebsparameter (S270a) Folgendes umfasst:
Erfassen von historischen Daten des Gebrauchs der Zielvorrichtung durch das Zielobjekt (S271a);
Erzeugen des vorherbestimmten Betriebsparameters gemäß den historischen Daten (S272a); und
Steuern der Zielvorrichtung gemäß dem vorherbestimmten Betriebsparameter (S273a).

5. Verfahren nach Anspruch 1, wobei der Schritt des Bestimmens einer geplanten Route gemäß der aktuellen Position und der Parkposition (S130, S230) Folgendes umfasst:
Erfassen einer Referenzroute gemäß räumlichen Charakteristiken zwischen der aktuellen Position und der Parkposition (S330), wobei die Referenzroute eine existierende gangbare Route zwischen der aktuellen Position und der Parkposition repräsentiert; und
Bestimmen der geplanten Route gemäß der Referenzroute (S340).

6. Verfahren nach Anspruch 5, wobei die Referenzroute eine Aktivitätsroute umfasst, die eine Route repräsentiert, entlang welcher sich das Zielobjekt nach dem Parken zur aktuellen Position bewegt, und wobei der Schritt des Erfassens einer Referenzroute gemäß räumlichen Charakteristiken zwischen der aktuellen Position und der Parkposition (S330) Folgendes umfasst:
Authentifizieren einer Identität des Zielobjekts während des Führens des Fahrzeugs (S331); und
Erfassen der Aktivitätsroute des Zielobjekts gemäß den räumlichen Charakteristiken zwischen der aktuellen Position und der Parkposition, nachdem die Identität des Zielobjekts authentifiziert worden ist (S332a), und
wobei der Schritt des Bestimmens der geplanten Route gemäß der Referenzroute (S340) Folgendes umfasst:
Erzeugen der geplanten Route für das Zielobjekt, um gemäß der Aktivitätsroute an der Parkposition anzukommen.

7. Verfahren nach Anspruch 5, wobei die Referenzroute eine Standardroute umfasst, die zumindest eine kürzeste Route von der aktuellen Position zur Parkposition umfasst, und wobei der Schritt des Erfassens einer Referenzroute gemäß räumlichen Charakteristiken zwischen der aktuellen Position und der Parkposition (S330) Folgendes umfasst:
Authentifizieren einer Identität des Zielobjekts während des Führens des Fahrzeugs (S331); und
Erfassen der Standardroute gemäß den räumlichen Charakteristiken zwischen der aktuellen Position und der Parkposition, nachdem die Identität des Zielobjekts authentifiziert worden ist (S332b), und
wobei der Schritt des Bestimmens der geplanten Route gemäß der Referenzroute (S340) Folgendes umfasst:
Erzeugen der geplanten Route für das Zielobjekt, um gemäß der Standardroute an der Parkposition anzukommen.

8. Einrichtung zum Steuern eines Fahrzeugs (500), umfassend:
ein erstes Erfassungsmodul (510) konfiguriert zum Erfassen einer Parkposition eines Fahrzeugs, wenn erkannt wird, dass das Fahrzeug gestoppt hat (S110, S210, S310);
ein zweites Erfassungsmodul (520) konfiguriert zum Erfassen einer aktuellen Position eines Zielobjekts, wobei die aktuelle Position eine Position des Zielobjekts repräsentiert (S120, S220, S320); und
ein Bestimmungsmodul (530) konfiguriert zum Bestimmen einer geplanten Route gemäß der aktuellen Position und der Parkposition, wobei die geplante Route eine gangbare Route von der aktuellen Position des Zielobjekts zur Parkposition des Fahrzeugs repräsentiert (S130, S230);
**dadurch gekennzeichnet, dass** die Einrichtung ferner Folgendes umfasst:
ein Erkennungsmodul (540) konfiguriert zu Folgendem: Erfassen einer Zugangsroute des Zielobjekts, wobei die Zugangsroute eine Route repräsentiert, entlang welcher sich das Zielobjekt bewegt, wenn es sich auf das Fahrzeug zubewegt (S240); Vergleichen der Zugangsroute mit der geplanten Route, um ein Vergleichsergebnis zu erhalten; und Bestimmen einer Wahrscheinlichkeit dafür, dass sich das Zielobjekt gemäß dem Vergleichsergebnis auf die Parkposition des Fahrzeugs zubewegt, um ein Erkennungsergebnis zu erfassen (S140, S350); und
ein Steuermodul (550) konfiguriert zum Bestimmen einer Steuerungsrichtlinie für das Fahrzeug gemäß dem Erkennungsergebnis (S150, S360).

9. Einrichtung (500) nach Anspruch 8, wobei:
wenn die Zugangsroute mit der geplanten Route übereinstimmt, falls eine Distanz zwischen der aktuellen Position und der Parkposition allmählich abnimmt, das Erkennungsergebnis ist, dass sich das Zielobjekt auf die Parkposition des Fahrzeugs zubewegt; und
das Steuermodul (550) zu Folgendem konfiguriert ist:
Bestimmen einer Zielvorrichtung, die am Fahrzeug gesteuert werden soll, wenn das Zielobjekt in einen ersten geografischen Bereich eintritt (S260a), falls das Erkennungsergebnis besagt, dass sich das Zielobjekt auf die Parkposition des Fahrzeugs zubewegt, und
Steuern der Zielvorrichtung gemäß einem vorherbestimmten Betriebsparameter (S270a).

10. Einrichtung (500) nach Anspruch 8, wobei das Bestimmungsmodul (530) zu Folgendem konfiguriert ist:
Erfassen einer Referenzroute gemäß räumlichen Charakteristiken zwischen der aktuellen Position und der Parkposition (S330), wobei die Referenzroute eine existierende gangbare Route zwischen der aktuellen Position und der Parkposition repräsentiert; und
Bestimmen der geplanten Route gemäß der Referenzroute (S340).

11. Fahrzeug (600), wobei das Fahrzeug Folgendes umfasst:
Arbeitsspeicher (620);
einen oder mehrere Prozessoren (610) gekoppelt an den Arbeitsspeicher (620); und
ein oder mehrere im Arbeitsspeicher (620) gespeicherte Programme, die bei Ausführung durch den einen oder die mehreren Prozessoren (610) zum Durchführen des Verfahrens nach einem der Ansprüche 1-7 führen.

12. Server (700), wobei der Server Folgendes umfasst:
Arbeitsspeicher (720);
einen oder mehrere Prozessoren (710) gekoppelt an den Arbeitsspeicher (720); und
ein oder mehrere im Arbeitsspeicher (720) gespeicherte Programme, die bei Ausführung durch den einen oder die mehreren Prozessoren (710) zum Durchführen des Verfahrens nach einem der Ansprüche 1-7 führen.

13. Computerlesbares Speichermedium (800) umfassend darauf gespeicherten Programmcode (810), der bei Ausführung durch einen Prozessor zum Durchführen des Verfahrens nach einem der Ansprüche 1-7 führt.

## Revendications

1. Procédé de commande de véhicule, comprenant les étapes consistant à :
acquérir une position de stationnement d'un véhicule lorsqu'il est détecté que le véhicule s'est arrêté (S110, S210, S310) ;
acquérir une position actuelle d'un objet cible, la position actuelle représentant une position de l'objet cible (S120, S220, S320) ; et
déterminer un itinéraire planifié selon la position actuelle et la position de stationnement, l'itinéraire planifié représentant un itinéraire réalisable de la position actuelle de l'objet cible à la position de stationnement du véhicule (S130, S230) ;
le procédé étant **caractérisé en ce qu'**il comprend en outre les étapes consistant à :
acquérir un itinéraire d'approche de l'objet cible, l'itinéraire d'approche représentant un itinéraire le long duquel l'objet cible se déplace lorsqu'il s'approche du véhicule (S240) ;
comparer l'itinéraire d'approche à l'itinéraire planifié pour obtenir un résultat de comparaison ;
déterminer, selon le résultat de comparaison, une probabilité que l'objet cible s'approche de la position de stationnement du véhicule en suivant l'itinéraire planifié, afin d'acquérir un résultat de détection (S250) ; et
déterminer une stratégie de commande pour le véhicule, selon le résultat de détection (S150, S360).

2. Procédé selon la revendication 1,
si une distance entre la position actuelle et la position de stationnement diminue progressivement, le résultat de détection étant que l'objet cible s'approche de la position de stationnement du véhicule lorsque l'itinéraire d'approche correspond à l'itinéraire planifié ;
l'étape de détermination d'une stratégie de commande pour le véhicule, selon le résultat de détection (S150), comprenant les étapes consistant à :
si le résultat de détection est que l'objet cible s'approche de la position de stationnement du véhicule, déterminer un dispositif cible à commander sur le véhicule lorsque l'objet cible entre dans les limites d'une première portée géographique (S260a) ; et
commander le dispositif cible selon un paramètre de fonctionnement prédéterminé (S270a).

3. Procédé selon la revendication 2, le procédé comprenant en outre les étapes consistant à :
si le résultat de détection est que l'objet cible s'approche de la position de stationnement du véhicule, déterminer si l'objet cible entre dans les limites d'une seconde portée géographique dans un délai prédéfini après l'entrée de l'objet cible dans les limites de la première portée géographique (S260b), la seconde portée géographique étant dans les limites de la première portée géographique ;
si l'objet cible n'est pas entré dans les limites de la seconde portée géographique dans le délai prédéfini, déterminer un itinéraire erroné, l'itinéraire erroné représentant un itinéraire le long duquel l'objet cible se déplace après une détermination incorrecte du fait que l'objet cible s'est approché du véhicule (S270b) ; et
mettre à jour la première portée géographique selon l'itinéraire erroné et l'itinéraire planifié (S280b).

4. Procédé selon la revendication 2, l'étape de commande du dispositif cible selon un paramètre de fonctionnement prédéterminé (S270a) comprenant les étapes consistant à :
acquérir des données historiques d'utilisation du dispositif cible par l'objet cible (S271a) ;
générer le paramètre de fonctionnement prédéterminé selon les données historiques (S272a) ; et
commander le dispositif cible selon le paramètre de fonctionnement prédéterminé (S273a).

5. Procédé selon la revendication 1, l'étape de détermination d'un itinéraire planifié selon la position actuelle et la position de stationnement (S130, S230) comprenant les étapes consistant à :
acquérir un itinéraire de référence selon des caractéristiques spatiales entre la position actuelle et la position de stationnement (S330), l'itinéraire de référence représentant un itinéraire réalisable existant entre la position actuelle et la position de stationnement ; et
déterminer l'itinéraire planifié selon l'itinéraire de référence (S340).

6. Procédé selon la revendication 5, l'itinéraire de référence comprenant un itinéraire d'activité représentant un itinéraire le long duquel l'objet cible se déplace jusqu'à la position actuelle après un stationnement, et l'étape d'acquisition d'un itinéraire de référence selon des caractéristiques spatiales entre la position actuelle et la position de stationnement (S330) comprenant les étapes consistant à :
authentifier une identité de l'objet cible pendant la conduite du véhicule (S331) ; et
acquérir l'itinéraire d'activité de l'objet cible selon les caractéristiques spatiales entre la position actuelle et la position de stationnement après l'authentification de l'identité de l'objet cible (S332a), et
l'étape de détermination de l'itinéraire planifié selon l'itinéraire de référence (S340) comprenant l'étape consistant à :
générer l'itinéraire planifié pour que l'objet cible arrive à la position de stationnement selon l'itinéraire d'activité.

7. Procédé selon la revendication 5, l'itinéraire de référence comprenant un itinéraire par défaut qui comprend au moins un itinéraire le plus court de la position actuelle à la position de stationnement, et l'étape d'acquisition d'un itinéraire de référence selon des caractéristiques spatiales entre la position actuelle et la position de stationnement (S330) comprenant les étapes consistant à :
authentifier une identité de l'objet cible pendant la conduite du véhicule (S331) ; et
acquérir l'itinéraire par défaut selon les caractéristiques spatiales entre la position actuelle et la position de stationnement après l'authentification de l'identité de l'objet cible (S332b), et
l'étape de détermination de l'itinéraire planifié selon l'itinéraire de référence (S340) comprenant l'étape consistant à :
générer l'itinéraire planifié pour que l'objet cible arrive à la position de stationnement selon l'itinéraire par défaut.

8. Appareil de commande de véhicule (500), comprenant :
un premier module d'acquisition (510), configuré pour acquérir une position de stationnement d'un véhicule lorsqu'il est détecté que le véhicule s'est arrêté (S110, S210, S310) ;
un second module d'acquisition (520), configuré pour acquérir une position actuelle d'un objet cible, la position actuelle représentant une position de l'objet cible (S120, S220, S320) ; et
un module de détermination (530), configuré pour déterminer un itinéraire planifié selon la position actuelle et la position de stationnement, l'itinéraire planifié représentant un itinéraire réalisable de la position actuelle de l'objet cible à la position de stationnement du véhicule (S130, S230) ;
l'appareil étant **caractérisé en ce qu'**il comprend en outre :
un module de détection (540), configuré pour : acquérir un itinéraire d'approche de l'objet cible, l'itinéraire d'approche représentant un itinéraire le long duquel l'objet cible se déplace lorsqu'il s'approche du véhicule (S240) ; comparer l'itinéraire d'approche à l'itinéraire planifié pour obtenir un résultat de comparaison ; et déterminer une probabilité que l'objet cible s'approche de la position de stationnement du véhicule, selon le résultat de comparaison afin d'acquérir un résultat de détection (S140, S350) ; et
un module de commande (550), configuré pour déterminer une stratégie de commande pour le véhicule, selon le résultat de détection (S150, S360).

9. Appareil (500) selon la revendication 8,
si une distance entre la position actuelle et la position de stationnement diminue progressivement, le résultat de détection étant que l'objet cible s'approche de la position de stationnement du véhicule lorsque l'itinéraire d'approche correspond à l'itinéraire planifié ; et
le module de commande (550) étant configuré pour :
déterminer un dispositif cible à commander sur le véhicule lorsque l'objet cible entre dans les limites d'une première portée géographique (S260a), si le résultat de détection est que l'objet cible s'approche de la position de stationnement du véhicule, et
commander le dispositif cible selon un paramètre de fonctionnement prédéterminé (S270a).

10. Appareil (500) selon la revendication 8, le module de détermination (530) étant configuré pour :
acquérir un itinéraire de référence selon des caractéristiques spatiales entre la position actuelle et la position de stationnement (S330), l'itinéraire de référence représentant un itinéraire réalisable existant entre la position actuelle et la position de stationnement ; et
déterminer l'itinéraire planifié selon l'itinéraire de référence (S340).

11. Véhicule (600), le véhicule comprenant :
une mémoire (620) ;
un ou plusieurs processeurs (610) couplés à la mémoire (620) ; et
un ou plusieurs programmes stockés dans la mémoire (620) qui, lorsqu'ils sont exécutés par les un ou plusieurs processeurs (610), entraînent la réalisation du procédé selon l'une quelconque des revendications 1 à 7.

12. Serveur (700), le serveur comprenant :
une mémoire (720) ;
un ou plusieurs processeurs (710) couplés à la mémoire (720) ; et
un ou plusieurs programmes stockés dans la mémoire (720) qui, lorsqu'ils sont exécutés par les un ou plusieurs processeurs (710), entraînent la réalisation du procédé selon l'une quelconque des revendications 1 à 7.

13. Support de stockage lisible par ordinateur (800) sur lequel est stocké un code de programme (810) qui, lorsqu'il est exécuté par un processeur, entraîne la réalisation du procédé selon l'une quelconque des revendications 1 à 7.
